# EUROPÄISCHE PATENTSCHRIFT

(11) **EP 4 326 001 B1**
(45) Veröffentlichungstag und Bekanntmachung des Hinweises auf die Patenterteilung: **20.08.2025**
(21) Anmeldenummer: 23191298.1
(22) Anmeldetag: 14.08.2023
(51) Int. Cl.: H05B 6/10, A47J 47/14, H05B 6/12

(54) **ESSEN-LIEFERTASCHE ZUR AUSLIEFERUNG VON LEBENSMITTELN**
FOOD DELIVERY BAG FOR DELIVERING FOOD
SAC DE DISTRIBUTION DE REPAS POUR LA DISTRIBUTION DE PRODUITS ALIMENTAIRES

(30) Priorität: 17.08.2022 DE 202022001828 U
(43) Veröffentlichungstag der Anmeldung: 21.02.2024
(73) Patentinhaber: Malinovsky, Evgeny Vasil 'Evic, 24113 Kiel (DE)
(72) Erfinder: Malinovsky, Evgeny Vasil 'Evic, 24113 Kiel (DE)
(74) Vertreter: Bauer, Dirk

(56) Entgegenhaltungen:
- WO-A1-2020/037370
- DE-U1- 202015 001 279
- US-A1- 2003 102 303
- US-B2- 7 034 254

## Beschreibung

Die Erfindung betrifft eine Essen-Liefertasche zur Auslieferung von Lebensmitteln gemäß dem Oberbegriff von Anspruch 1.

Die Essen-Liefertasche, die für ein Induktionssystem vorgesehen ist, ist als Tasche mit sechs Außenwänden zur Begrenzung eines Innenraums aufgebaut, wobei eine der Außenwände zwecks Befüllens der Tasche öffenbar ausgebildet wird. Die Essen-Liefertasche umfasst einen Boden, einen Einschub und eine Induktions-Wärmescheibe, wobei die Induktions-Wärmescheibe in dem Einschub gelagert ist. Der Boden wird als eine der sechs Außenwände aufgefasst, die beim Transport der Essen-Liefertasche mit einer Aufstellfläche, also beispielsweise einem Kofferraumboden, in Kontakt kommt. Somit dient der Boden als Aufstandsfläche der Essen-Liefertasche. Als Einschub wird ein Freiraum der Essen-Liefertasche sowie eine den Freiraum begrenzende Trennwand verstanden, wobei der Freiraum einerseits von dem Boden und andererseits von der Trennwand begrenzt wird. Die Trennwand unterteilt den Innenraum der Essen-Liefertasche somit in einen Aufnahmeraum für das auszuliefernde Essen und den Einschub.

### Stand der Technik

Essen-Liefertaschen der vorgenannten Art sind bereits aus dem Stand der Technik bekannt, beispielsweise aus der Patentschrift US 6,274,856 B1, und werden typischerweise von Lieferdiensten für Speisen genutzt, wie zum Beispiel von Pizza-Lieferdiensten. Die Essen-Liefertasche dient dazu, eine Speise während eines Transports warm zu halten, wobei die Hitze von der zuvor erhitzten Induktions-Wärmescheibe abgegeben wird. Um die Induktions-Wärmescheibe vor einem Transport zu erhitzen, wird die gesamte Tasche auf ein Induktionsfeld gelegt, wobei aufgrund der Induktionstechnik lediglich die Induktions-Wärmescheibe erhitzt wird. Dies hat den Vorteil, dass die Induktions-Wärmescheibe immer in der Essen-Liefertasche verbleiben kann und nicht als einzelner Bestandteil gehandhabt werden muss, was insbesondere bei erhitzter Induktions-Wärmescheibe mit einem Risiko verbunden wäre. Die bekannte Essen-Liefertasche besitzt einen Boden, in den ein Kunststoff-Tray eingebaut ist, das einen vorbestimmten Abstand von der Induktions-Wärmescheibe gewährleisten soll, zum einwandfreien Betrieb der Induktionstechnik. Das Kunststoff-Tray gibt der Essen-Liefertasche darüber hinaus eine stabilere Form.

Auch aus der US 2003/0102303 A1 ist eine Essen-Liefertasche mit Induktions-Wärmescheibe bekannt.

Bekannten Essen-Liefertaschen haftet das Problem an, dass deren Haltbarkeit unzufriedenstellend ist. Durch das Gewicht der Induktionswärmescheibe und die oftmals unvorsichtige Handhabung der Essen-Liefertaschen bei der Auslieferung kommt es nach einigen Monaten zum Bruch von Bestandteilen des Einschubs oder zu einem hohen Verschleiß der Essen-Liefertasche als solcher, die im Extremfall Löcher in ihrer Außenschicht aufweisen kann. Aufgrund eines vergleichsweisen hohen Preises der Essen-Liefertaschen sowie im Hinblick auf den Wunsch nach mehr Nachhaltigkeit ist eine Neuanschaffung von verschlissenen oder kaputten Essen-Liefertaschen unerwünscht.

### Aufgabe

Aufgabe der vorliegenden Erfindung ist es, eine Essen-Liefertasche der eingangs genannten Art im Hinblick auf ihre Robustheit zu verbessern.

### Lösung

Diese Aufgabe wird erfindungsgemäß mittels einer Essen-Liefertasche mit den Merkmalen des Anspruchs 1 gelöst. Vorteilhafte Ausgestaltungen ergeben sich aus den Unteransprüchen 2 bis 13.

Die erfindungsgemäße Essen-Liefertasche ist dadurch gekennzeichnet, dass eine Oberseite der Schutzplatte in Richtung eines Innenraums der Essen-Liefertasche ausgerichtet ist. Als Unterseite der Schutzplatte wird die Seite der Schutzplatte aufgefasst, die zu dem Boden der Essen-Liefertasche weist. Ausgehend von einer Aufstellfläche der Essen-Liefertasche ergibt sich somit folgender Aufbau: Boden, Induktions-Wärmescheibe im Einschub, Schutzplatte. Demnach befindet sich die Schutzplatte auf der dem Boden abgewandten Seite der Induktions-Wärmescheibe. Die Schutzplatte verleiht der Induktions-Wärmescheibe eine größere Stabilität und schützt sie vor äußeren Einwirkungen, so dass die Induktions-Wärmescheibe bei der Handhabung der Essen-Liefertasche weniger beansprucht wird, was einem Verschleiß derselben entgegenwirkt. Des Weiteren schützt die Schutzplatte die Trennwand - ausgehend von der Induktions-Wärmescheibe - vor einer zu großen Hitzeeinwirkung, so dass der Gefahr von Brandlöchern in der Trennwand entgegengewirkt wird. Dieses Problem besteht nämlich bei herkömmlichen Essen-Liefertaschen. Außerdem kann bei der erfindungsgemäßen Essen-Liefertasche auf die Verwendung eines aus dem Stand der Technik bekannten Kunststoff-Trays verzichtet werden. Da die bekannten Kunststoff-Trays keine hohe Lebensdauer besitzen, nämlich höchstens drei Monate, stellt ein solcher Verzicht einen sehr großen wirtschaftlichen Vorteil dar.

Gemäß der Erfindung ist es also vorgesehen, dass eine Oberseite der Schutzplatte in Richtung eines Innenraums der Essen-Liefertasche ausgerichtet ist. Somit befindet sich die Schutzplatte zwischen den warm zu haltenden Lebensmitteln oder Speisen und der Induktions-Wärmescheibe.

Es ist besonders von Vorteil, wenn eine Fläche der Schutzplatte eine Fläche der Induktions-Wärmescheibe betragsmäßig deutlich übersteigt. Demnach steht die Schutzplatte zu allen Seiten hin über die Induktions-Wärmescheibe über, so dass die Induktions-Wärmescheibe insbesondere an einer gesamten, zu der Schutzplatte weisenden Oberfläche sowie an all ihren Rändern vor äußeren Einwirkungen geschützt ist. Dabei ist es ferner von Vorteil, wenn die Induktions-Wärmescheibe mittig von der Schutzplatte angeordnet ist; anders ausgedrückt, dass ein Mittelpunkt der Induktions-Wärmescheibe mit einem Mittelpunkt der Schutzplatte zusammenfällt. Dies ist in Hinblick auf eine optimierte Gewichtsverteilung von Vorteil. Dadurch, dass die Schutzplatte die Induktions-Wärmescheibe zu allen Seiten hin überragt und somit eine größere Fläche besitzt, kann die von der Induktions-Wärmescheibe abgestrahlte Wärme - abhängig von dem Material der Schutzplatte - auf eine größere Fläche verteilt werden. Hierdurch lässt sich die Wärmeübertragung auf die zu transportierenden Lebensmittel deutlich erhöhen, im besten Fall um 50 %. Darüber hinaus ist die Ausbildung der Induktions-Wärmescheibe mit geringerer Fläche im Hinblick auf das Gewicht der Essen-Liefertasche vorteilhaft, da eine Induktions-Wärmescheibe mit größerer Fläche ein deutlich größeres Gewicht mit sich bringen würde. Eine Schutzplatte großer Fläche aus wärmeleitendem Material mit einer Induktions-Wärmescheibe kleinerer Fläche kombiniert, zeichnet sich durch optimiertes Gewicht sowie optimale Heizeigenschaften aus. Ein weiterer großer Vorteil der erfindungsgemäßen Essen-Liefertasche besteht darin, dass der Innenraum bei erhitzter Induktions-Wärmescheibe auf 90 bis 100 Grad Celsius aufgewärmt wird, so dass eventuell vorliegende Keime abgetötet werden. Auch ist die Verbreitung von Salmonellen somit unterbunden.

Dabei ist es ferner besonders von Vorteil, wenn die Schutzplatte flächenmäßig derart auf den Einschub abgestimmt ist, dass die Schutzplatte passgenau in dem Einschub aufgenommen ist. Auf diese Weise ist einem Verrutschen der Schutzplatte - und somit auch der an der Schutzplatte angebrachten Induktions-Wärmescheibe - innerhalb des Einschubs entgegengewirkt. Die Schutzplatte verbleibt während sämtlicher Handhabung der erfindungsgemäßen Essen-Liefertasche stabil und lagefest innerhalb des Einschubs, was darüber hinaus den Vorteil hat, dass die Induktions-Wärmescheibe immer an einem vordefinierten Ort verbleibt. Die Schutzplatte ihrerseits verteilt die von der Induktions-Wärmescheibe abgegebene Wärme über ihre gesamte Fläche, so dass die zu transportierenden Speisen auf der gesamten Grundfläche der Essen-Liefertasche zu liegen kommen können und dort warm gehalten werden. Ein weiterer Vorteil der passgenauen Schutzplatte ist darin zu sehen, dass ausgehend von dem Innenraum der Essen-Liefertasche eine Aufstellfläche für die Speisen entsteht, der völlig glatt und ohne Erhebungen ausgebildet ist. Bei herkömmlichen Essen-Liefertaschen, die ohne erfindungsgemäße Schutzplatte ausgebildet sind, liegt in der Aufstellfläche für die Speisen entlang des Umfangs der Induktions-Wärmescheibe ein stufenartiger Versprung führt, der wiederum zu einer negativen Verschleißerscheinung führt: Insbesondere bei dem Transport von Pizzakartons, die entlang der Aufstellfläche in den Innenraum geschoben werden, stößt der Pizzakarton regelmäßig an den vorbeschriebenen Versprung der aus dem Stand der Technik bekannten Essen-Liefertaschen, deren Trennwand somit starken Verschleißerscheinungen unterliegt. Diesem Nachteil ist durch die vorliegende Erfindung entgegengewirkt. Ein weiterer Vorteil der Schutzplatte besteht darin, dass sie der Essen-Liefertasche beim Transport derselben eine stabile Form gibt, so dass die zu transportierenden Speisen an ihrem Standort verbleiben und nicht aufgrund eines weichen Bodens kippen oder verrutschen können.

Gemäß einer Ausgestaltung der erfindungsgemäßen Essen-Liefertasche ist die Schutzplatte rechteckig oder kreisförmig ausgebildet ist, wobei vorzugsweise - bei einer rechteckigen Schutzplatte - die Schutzplatte Abmessungen im Bereich zwischen 380 mm x 370 mm und 390 mm x 370 mm aufweist. Eine derartige Schutzplatte ist an Standard-Maße von Essen-Liefertaschen angepasst.

Die vorgenannte Schutzplatte weiter ausgestaltend kann es vorgesehen sein, dass Kanten der Schutzplatte abgerundet oder abgeschrägt ausgebildet sind. Hierdurch werden die korrespondierenden Bereiche der Essen-Liefertasche, die in ständigem Kontakt mit den Kanten der Schutzplatte stehen, deutlich geschont, was wiederum zu weniger Beanspruchung sowie Verschleiß der Essen-Liefertasche führt. Diesbezüglich kann es ferner von Vorteil sein, wenn Ecken der Schutzplatten abgerundet oder abgeschrägt ausgebildet sind.

Es hat sich als besonders vorteilhaft gezeigt, wenn eine Dicke der Schutzplatte zwischen 1 mm und 3 mm, vorzugsweise 1, 5 mm, beträgt, da die Schutzplatte somit eine gute Stabilität und Haltbarkeit aufweist.

In Bezug auf eine hohe Stabilität, Haltbarkeit sowie gute Wärmeleitfähigkeit ist es gemäß einer vorteilhaften Weiterbildung der erfindungsgemäßen Essen-Liefertasche vorgesehen, dass die Schutzplatte von Aluminium gebildet ist. Aluminium ist ein stabiles Material, das zum Schutz der Induktions-Wärmescheibe vor äußeren Einwirkungen besonders gut geeignet ist. Ferner übernimmt die Schutzplatte aufgrund ihrer Lage zwischen der Induktions-Wärmescheibe und den zu transportierenden Speisen zum einen die Aufgabe, die Wärme der Induktions-Wärmescheibe auf eine größere Fläche zu verteilen und zum anderen die Wärme an die warm zu haltenden Speisen zu übertragen. Besitzt die Schutzplatte Abmessungen entsprechend der Abmessungen des Bodens, so werden die Speisen über den gesamten Boden warmgehalten. Zusätzlich hat die erfindungsgemäße Schutzplatte den Effekt, dass sie die gesamte Warmhaltedauer - im Gegensatz zu herkömmlichen Essen-Liefertaschen - um 5 bis 10 % verlängert, da sie einem schnellen Auskühlen der Induktions-Wärmescheibe entgegenwirkt.

Eine besonders vorteilhafte und langlebige Art und Weise der Befestigung von Schutzplatte und Induktions-Wärmescheibe ist dann gegeben, wenn die Schutzplatte mittels Nieten, vorzugsweise Blindnieten, mit der Induktions-Wärmescheibe verbunden ist.

Eine weitere vorteilhafte Ausführungsform der erfindungsgemäßen Essen-Liefertasche sieht vor, dass die Induktions-Wärmescheibe kreisflächenförmig ausgebildet ist, wobei vorzugsweise die Induktions-Wärmescheibe einen Durchmesser von 250 mm aufweist. Derartige Induktions-Wärmescheiben sind im Handel erhältlich, so dass diese einfach zu beschaffen sind.

Bezüglich der Induktions-Wärmescheibe ist es weiterhin besonders vorteilhaft, wenn diese eine Dicke von 10 mm besitzt, da eine derartige Wärmescheibe eine gute und ausreichende Wärmespeicherung aufweist. Bei Lieferdiensten kann die Lieferdauer zwischen 45 und 60 Minuten betragen, so dass ein Warmhalten der zu liefernden Speisen mittels der vorgenannten Induktions-Wärmescheibe gegeben ist.

Um die Wärmeübertragung zusätzlich zu verbessern, ist gemäß einer Weiterentwicklung der erfindungsgemäßen Essen-Liefertasche vorgesehen, dass eine dem Innenraum abgewandte Wandung des Einschubs mit einer Aluminiumbeschichtung versehen ist, die dazu vorgesehen und eingerichtet ist, von der Induktions-Wärmescheibe abgestrahlte Wärme an der Wandung zu reflektieren. Auf diese Weise wird die Wärme nicht in Richtung eines Außenbereichs der Essen-Liefertasche abgestrahlt, sondern verbleibt innerhalb der Essen-Liefertasche beziehungsweise wird in Richtung des warm zu haltenden Lebensmittels abgestrahlt. Andererseits bleibt auf diese Weise die Induktions-Wärmescheibe sowie die Schutzplatte länger warm. In Bezug auf die Aluminiumbeschichtung kann es des Weiteren von Vorteil sein, wenn diese auf einem Glasfaserstoff beziehungsweise -Gewebe aufgebracht ist, so dass eine hohe Reißfestigkeit vorliegt.

Ferner ist es besonders von Vorteil, wenn der Boden von Glasfaser-Gewebe gebildet ist. Glasfaser-Gewebe zeichnet sich durch eine sehr hohe Festigkeit aus, die dem Boden der Essen-Liefertasche eine hohe Robustheit und Langlebigkeit verleiht. In Bezug auf den übrigen Taschenkörper - also außerhalb des Bodens - kann es weiterhin von Vorteil sein, wenn dieser atmungsaktiv ausgebildet ist, so dass im Innenraum der Essen-Liefertasche kein Kondensat ausfällt. Das ist in Bezug auf die Konsistenz der auszuliefernden Speisen besonders vorteilhaft, da diese nicht "matschig" werden, sondern wie frisch zubereitet bleiben.

Gemäß einer weiteren Ausgestaltung der erfindungsgemäßen Essen-Liefertasche weist der Boden eine Isolationsschicht auf, die von einem Isolationsstoff gebildet ist, wobei vorzugsweise die Isolationsschicht eine Dicke zwischen 10 mm und 12 mm aufweist. Hierdurch wird erzielt, dass die Induktions-Wärmescheibe ihre Wärme nicht auch zum Boden hin abgibt, wodurch ein Teil der Wärme ineffektiv verloren gehen würde. Vielmehr wird durch die Isolationsschicht erreicht, dass die Wärme quasi vollständig zu dem Innenraum der Essen-Liefertasche, also zu den warm zu haltenden Speisen abgegeben wird. Darüber hinaus dient die Isolationsschicht auch als Abstandhalter, der für einen vordefinierten Abstand zwischen der Induktions-Wärmescheibe und einer Aufstellfläche der Essen-Liefertasche sorgt. Das hat den Vorteil, dass bekannte Induktionsgeräte mit ihren Voreinstellungen die Induktions-Wärmescheibe schnell erkennen.

Alternativ kann die Isolationsschicht auch bei dem gesamten Taschenkörper vorgesehen sein, was der Essen-Liefertasche neben einer guten Dämmung ferner eine gute Stabilität und Form gibt. Bei der Isolationsschicht kann es sich beispielsweise um ein atmungsaktives Polyestervlies handeln.

Die eingangs genannte Aufgabe wird ferner durch eine Essen-Liefertasche zur Auslieferung von Lebensmitteln gelöst, wobei die erfindungsgemäße Essen-Liefertasche einen Taschenkörper umfasst, der dazu eingerichtet ist, einen Innenraum der Essen-Liefertasche zu umschließen. Ferner umfass die Essen-Liefertasche eine Induktions-Wärmescheibe, wobei der Taschenkörper einen Boden aufweist, in dem ein Einschub zur Aufnahme der Induktions-Wärmescheibe ausgebildet ist. Dabei ist die Induktions-Wärmescheibe dazu vorgesehen und eingerichtet, mittels eines stationären Heizsystems induktiv erwärmt zu werden, sodass mittels der Induktions-Wärmescheibe der Innenraum erwärmt und/oder warmgehalten werden kann. Die erfindungsgemäßen Essen-Liefertasche besitzt eine Schutzplatte, wobei die Induktions-Wärmescheibe an einer Unterseite der Schutzplatte angeordnet und an der Schutzplatte montiert ist. Die Essen-Liefertasche ist dadurch gekennzeichnet, dass eine Oberseite der Schutzplatte in Richtung eines Innenraums der Essen-Liefertasche ausgerichtet ist. Die Vorteile dieser Essen-Liefertasche ergeben sich analog aus dem Vorgesagten zu der Essen-Liefertasche gemäß Anspruch 1.

### Ausführungsbeispiele

Die Erfindung ist nachstehend anhand eines Ausführungsbeispiels, das in den Figuren dargestellt ist, näher erläutert. Es zeigt:
- Fig. 1:: Eine dreidimensionale Ansicht einer erfindungsgemäßen Essen-Liefertasche in einer geöffneten Stellung,
- Fig. 2:: Einen Vertikalschnitt durch die Essen-Liefertasche aus Figur 1,
- Fig. 3:: Einen Schnitt durch Außenwandungen eines Einschubs der Essen-Liefertasche aus Figur 1,
- Fig. 4:: Eine Draufsicht auf eine Schutzplatte mit Induktions-Wärmescheibe der Essen-Liefertasche aus Figur 1,
- Fig. 5:: Einen Vertikalschnitt der Schutzplatte mit Induktions-Wärmescheibe aus Figur 4,
- Fig. 6:: Einen Vertikalschnitt durch die Schutzplatte mit Induktions-Wärmescheibe aus Figur 4 im Bereich einer Niete,
- Fig. 7:: Eine dreidimensionale Draufsicht auf eine Oberseite der Schutzplatte aus Figur 4,
- Fig. 8:: Eine dreidimensionale Unteransicht auf eine Unterseite der Schutzplatte mit Induktions-Wärmescheibe aus Figur 4.

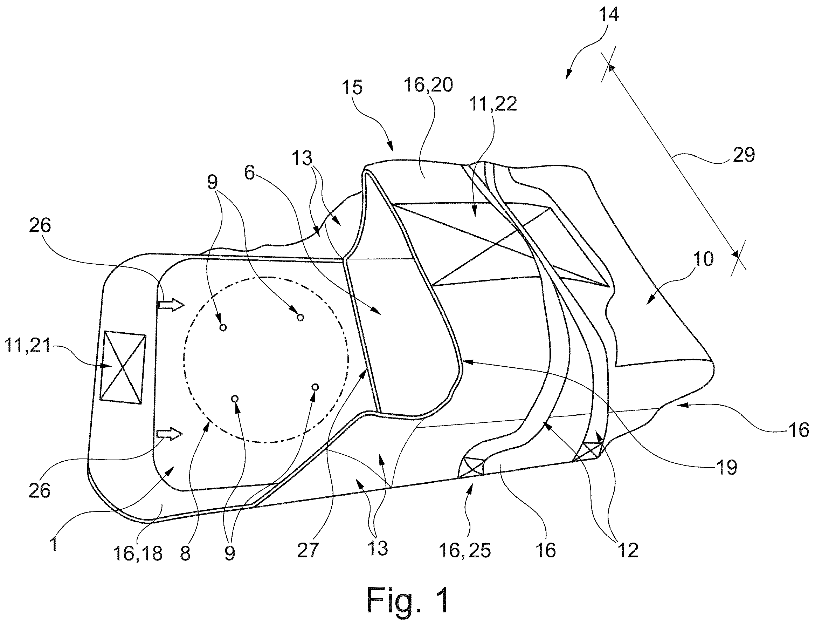

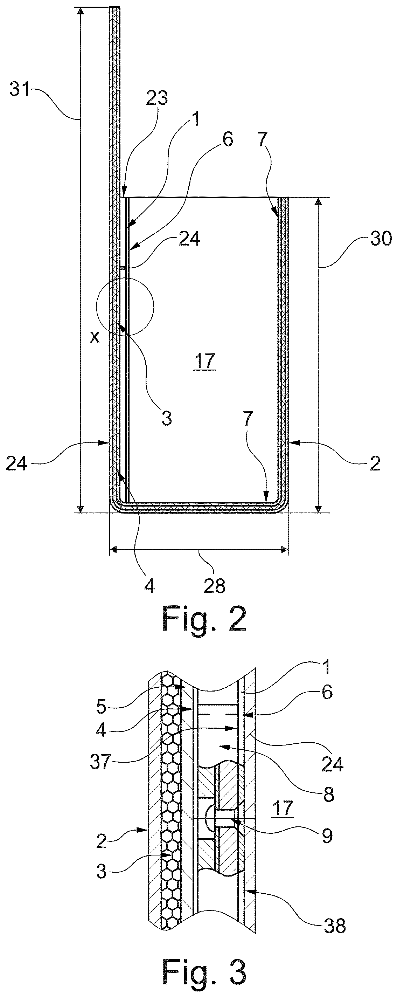

In den Figuren 1 bis 8 ist eine erfindungsgemäße Essen-Liefertasche 14 zur Auslieferung von Lebensmitteln sowie ihre Komponenten gezeigt. Die Essen-Liefertasche 14, die in den Figuren 1 und 2 in einer geöffneten Stellung gezeigt ist, besitzt einen Taschenkörper 15 mit sechs Außenwänden 16, die einen Innenraum 17 der Essen-Liefertasche 14 begrenzen. Der Innenraum 17 dient zur Platzierung von Lebensmitteln, wie beispielsweise Pizzen, Pasta, Burger, Fritten oder ähnlichem, die typischerweise in Kartons oder anderen Verpackungen ausgeliefert werden. Die transportierten Lebensmittel sind in den Figuren nicht dargestellt.

In der Figur 1 ist gut zu erkennen, dass eine der Außenwände 16, nämlich eine linke Seitenwand 18, klappbar ausgebildet ist, so dass sich die Essen-Liefertasche 14 nach dem Aufklappen der linken Seitenwand 18 in ihrer geöffneten Stellung befindet. Die linke Seitenwand 18 ist so lang ausgebildet, dass sie in einem zugeklappten Zustand um eine Kante 19 der Außenwand 16, die einer obere Seitenwand 20 entspricht, geklappt wird und mit einem Abschnitt auf einer äußeren Oberfläche der oberen Seitenwand 20 zu liegen kommt. Die linke Seitenwand 18 wird mittels eines ersten Teils 21 eines Klettverschlusses 11, der auf einer Innenseite der linken Seitenwand 18 positioniert ist, an einem korrespondierenden zweiten Teil 22 des Klettverschlusses 11, der an der äußeren Oberfläche der oberen Seitenwand 20 positioniert ist, in ihrer geschlossenen Stellung lösbar fixiert. Der zweite Teil 22 ist des Klettverschlusses 11 ist deutlich größer ausgebildet, als der erste Teil 21 des Klettverschlusses 11, um die Essen-Liefertasche 14 bei verschiedenen Füllungszuständen verschließen zu können und um zu vermeiden, dass der erste Teil 21, der als Hakenteil des Klettverschlusses 11 ausgebildet ist, an die Oberfläche der Essen-Liefertasche 14 zu gelangen, wodurch diese beschädigt würde. Der zweite Teil 22 ist als Flauschteil ausgebildet.

Ferner besitzt die Essen-Liefertasche 14 Griffe 12 zum Ergreifen und Transport derselben. Auch besitzt die Essen-Liefertasche 14 Einsätze 13 für einen verbesserten Wärmerückhalt, sowie ein zusätzliches Fach 10 an der oberen Seitenwand 20 für den Transport von Salaten, Saucen oder anderen nicht warm zu haltenden Speisen.

Die erfindungsgemäße Essen-Liefertasche 14 besitzt einen Einschub 6, der sich aus einem Freiraum 23 und einer Trennwand 24 zusammensetzt. Demnach wird der Freiraum 23 einerseits von der Außenwand 16, die einen Boden 25 der Essen-Liefertasche 14 bildet, und andererseits von der Trennwand 24 begrenzt. Mittels der Trennwand 24 wird der Freiraum 23 von dem Innenraum 17 der Essen-Liefertasche 14 abgetrennt. Innerhalb des Einschubs 6 befindet sich eine Induktions-Wärmescheibe 8, die wiederum mittels vier Nieten 9 an einer Schutzplatte 1 fixiert ist. Selbstverständlich ist es auch möglich, die Fixierung über mehr als vier Nieten 9, wie beispielsweise acht Nieten 9 vorzunehmen. In der Figur 1 ist die Induktions-Wärmescheibe 8 mit ihrer Schutzplatte 1 in einer Position gezeigt, in der sie sich noch außerhalb des Einschubs 6 befindet. Zwei Pfeile 26 deuten an, dass die Induktions-Wärmescheibe 8 mit ihrer Schutzplatte 1 in den Einschub 6 geschoben wird. Die Induktions-Wärmescheibe 8 ist in der Figur 1 gestrichelt dargestellt, da sie sich auf einer dem Boden 25 zugewandten Unterseite 37 der Schutzplatte 1 und somit hinter der Schutzplatte 1 befindet. Die Induktions-Wärmescheibe 8 ist rund ausgebildet und besitzt beispielsweise einen Durchmesser von 250 mm. Es ist deutlich zu erkennen, dass die Schutzplatte 1 deutlich größere Abmessungen besitzt und somit zu allen Seiten hin über die Induktions-Wärmescheibe 8 übersteht. Die Abmessungen der Schutzplatte 1 sind so gewählt, dass sie passgenau von dem Einschub 6 aufgenommen werden kann, so dass ein Hin- und Her-Rutschen der Schutzplatte 1 und somit der Induktions-Wärmescheibe 8 vermieden wird. Ecken der Schutzplatte 1 sowie umlaufende Kanten derselben sind abgerundet ausgebildet, um eine Beanspruchung des Materials der Außenwände 16 und der Trennwand 24 der Essen-Liefertasche 14 zu vermeiden beziehungsweise zu minimieren.

Der Einschub 6 kann an einer in der Figur 1 zu erkennenden Vorderseite 27 mit einem nicht in den Figuren dargestellten Verschluss, beispielsweise in Form eines Reißverschlusses, eines Klettverschlusses oder in Form von Druckknöpfen versehen sein, um zu gewährleisten, dass die Induktions-Wärmescheibe 8 bei der Handhabung der Essen-Liefertasche 14 nicht aus dem Einschub 6 rutschen kann.

In der Figur 2 ist die erfindungsgemäße Essen-Liefertasche 14 in einem Vertikalschnitt gezeigt, die eine Höhe 28 im Bereich von 220 mm bis 270 mm, eine Breite 29 von 445 mm und eine Länge 30 von 400 mm besitzt. In ihrem aufgeklappten Zustand beträgt die Länge 31 des Bodens 25 mit der aufgeklappten Außenwand 16 insgesamt 760 mm bis 780 mm.

Die erfindungsgemäße Essen-Liefertasche 14 besitzt gemäß des Ausführungsbeispiels - ausgenommen im Bereich des Bodens 25 - einen Taschenkörper 15 aus einer atmungsaktiven Schicht 7 aus Polyester, die auf der dem Innenraum 17 abgewandten Seite hin von einer Isolationsschicht 3 aus atmungsaktivem Polyestervlies überdeckt wird. Eine äußere Schicht 2 kann aus einem atmungsaktiven Polyester gebildet werden. Dadurch, dass der Wandaufbau atmungsaktiv ausgebildet ist, fällt in der Essen-Liefertasche 14 kein Kondensat an. Das ist im Hinblick auf die Konsistenz der auszuliefernden Speisen besonders vorteilhaft, da diese wie frisch zubereitet bleiben. Bei herkömmlichen Taschen kann sich Kondensat im Innenraum bilden, so dass beispielsweise Fritten, Pizzen oder andere Speisen ihre frische Konsistenz verlieren und pappig oder matschig werden. Dies ist bei der vorliegenden erfindungsgemäßen Essen-Liefertasche aufgrund der atmungsaktiven Ausbildung nicht der Fall.

Der Schichtaufbau der erfindungsgemäßen Essen-Liefertasche im Bereich des Bodens 25 ist in der Figur 3 vergrößert dargestellt, wobei die Schichtenfolge von außen nach innen, also von links nach rechts wie folgt ist: Eine äußere Schicht 2 besteht aus einem atmungsaktiven Polyester und die Isolationsschicht 3 besteht aus einem atmungsaktiven Polyestervlies mit einer Dicke von 10 mm. Auf die Isolationsschicht 3 folgt ein Glasfaser-Gewebe 5, das auf einer dem Innenraum 17 zugewandten Seite hin eine Aluminiumbeschichtung 4 aufweist. Dementsprechend ist eine dem Innenraum 17 abgewandte Wandung des Einschubs 6, nämlich der Boden 25, auf einer dem Einschub 6 zugewandten Seite hin mit einer Aluminiumbeschichtung 4 versehen, so dass von der Induktions-Wärmescheibe 8 abgestrahlte Wärme an der Wandung reflektiert wird und innerhalb der Essen-Liefertasche 14 verbleibt. Zwischen der Trennwand 24 und dem Schichtaufbau des Bodens 25, also im Einschub 6, befindet sich die Induktions-Wärmescheibe 8, die auf der Unterseite 37 der Schutzplatte 1 angebracht ist. Eine Oberseite 38 der Schutzplatte 1 weist zum Innenraum 17 der Essen-Liefertasche 14 hin. Die Trennwand 24 besteht aus einem hitzebeständigem Polyester.

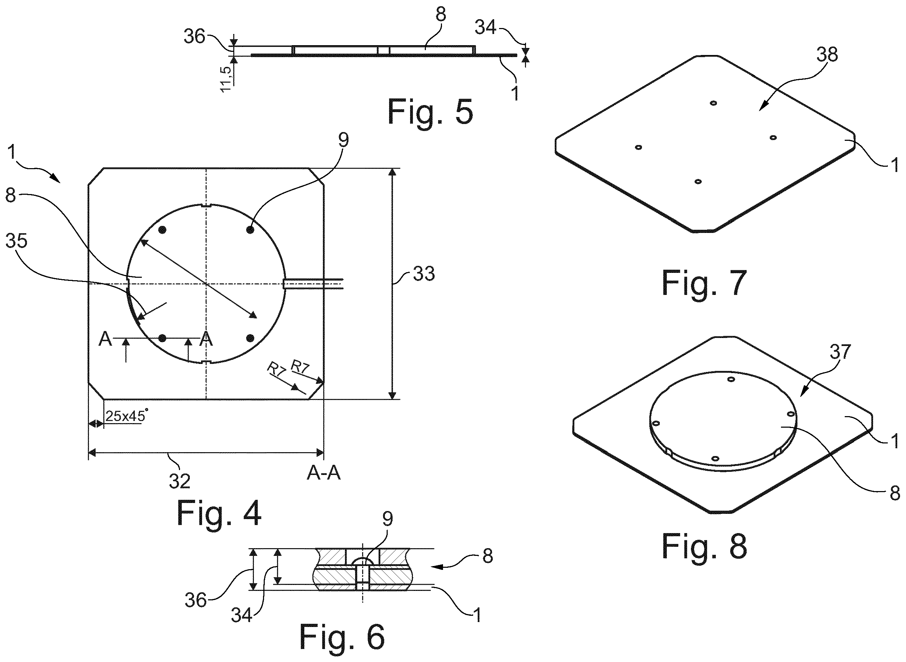

Die Figuren 4 bis 8 zeigen die Induktions-Wärmescheibe 8 und die Schutzplatte 1, wobei gut zu erkennen ist, dass die Induktions-Wärmescheibe 8 mit mindestens vier Nieten 9 an der Schutzplatte 1 befestigt ist. Die Schutzplatte 1 ist rechteckig und besitzt eine Breite 32 von 380 mm, eine Länge 33 von 370 mm und eine Dicke 34 von 1, 5 mm. Ferner besteht die Schutzplatte 1 im vorliegenden Ausführungsbeispiel aus Aluminium, so dass zum einen eine gute Festigkeit und Haltbarkeit der Schutzplatte 1 und zum anderen eine gute Wärmeleitfähigkeit der Schutzplatte 1 vorliegt. Die gute Wärmeleitfähigkeit ist deshalb von Vorteil, da die von der Induktions-Wärmescheibe abgegebene Wärme somit auf die gesamte Schutzplatte verteilt wird und über die Schutzplatte 1 wiederum auf die warm zu haltenden Speisen abgegeben wird. Für die Schutzplatte 1 sind jedoch auch andere Materialien denkbar.

Die Induktions-Wärmescheibe 8 besitzt einen Durchmesser 35 von 250 mm und eine Dicke 36 von 10 mm. Die Ecken der Schutzplatte 1 sind im den Figuren 4 bis 8 abgeschrägt dargestellt, als Variante zu der in der Figur 1 dargestellten Abrundung der Ecken. In der Figur 6 ist ein Ausschnitt der Induktions-Wärmescheibe 8 mit der Schutzplatte 1 dargestellt, in dem sich die Nieten 9 befinden. Es ist zu erkennen, dass es sich um Blindnieten handelt, die in die Induktions-Wärmescheibe 8 eingelassen sind, und nicht über eine Oberseite der Induktions-Wärmescheibe 8 überstehen. In der Figur 7, die eine dreidimensionale Ansicht auf eine Oberseite 38 der Schutzplatte 1 zeigt, sind die Nieten 9 zu erkennen. In der Figur 8, die eine dreidimensionale Ansicht auf die Unterseite 37 der Schutzplatte 1 zeigt, ist ebenfalls die an der Unterseite 37 befindliche Induktions-Wärmescheibe 8 zu sehen. Im eingesetzten Zustand der Schutzplatte 1 in dem Einschub 6 der Essen-Liefertasche 14 zeigt die Unterseite 37 der Schutzplatte 1 zum Boden 25 und die Oberseite 38 der Schutzplatte 1 zu der Trennwand 24.

### Bezugszeichenliste

- 1: Schutzplatte
- 2: Äußere Schicht
- 3: Isolationsschicht
- 4: Aluminiumbeschichtung
- 5: Glasfaser-Gewebe
- 6: Einschub
- 7: Atmungsaktive Schicht
- 8: Induktions-Wärmescheibe
- 9: Nieten
- 10: Fach
- 11: Klettverschluss
- 12: Griff
- 13: Zusätzliche Einsätze
- 14: Essen-Liefertasche
- 15: Taschenkörper
- 16: Außenwand
- 17: Innenraum
- 18: Linke Seitenwand
- 19: Kante
- 20: Obere Seitenwand
- 21: Erster Teil
- 22: Zweiter Teil
- 23: Freiraum
- 24: Trennwand
- 25: Boden
- 26: Pfeil
- 27: Vorderseite
- 28: Höhe
- 29: Breite
- 30: Länge
- 31: Länge
- 32: Breite
- 33: Länge
- 34: Dicke Schutzplatte
- 35: Durchmesser
- 36: Dicke Induktions-Wärmescheibe
- 37: Unterseite Schutzplatte
- 38: Oberseite Schutzplatte

## Patentansprüche

1. Essen-Liefertasche (14) zur Auslieferung von Lebensmitteln, umfassend
- einen Boden (25),
- einen Einschub (6),
- eine Induktions-Wärmescheibe (8), wobei die Induktions-Wärmescheibe (8) in dem Einschub (6) gelagert ist,
- eine Schutzplatte (1), wobei die Induktions-Wärmescheibe (8) an einer Unterseite (37) der Schutzplatte (1) angeordnet und an der Schutzplatte (1) montiert ist,
**dadurch gekennzeichnet, dass** eine Oberseite (38) der Schutzplatte (1) in Richtung eines Innenraums (17) der Essen-Liefertasche (14) ausgerichtet ist.

2. Essen-Liefertasche (14) nach Anspruch 1, **dadurch gekennzeichnet, dass** eine Fläche der Schutzplatte (1) eine Fläche der Induktions-Wärmescheibe (8) betragsmäßig deutlich übersteigt.

3. Essen-Liefertasche (14) nach einem der Ansprüche 1 oder 2, **dadurch gekennzeichnet, dass** die Schutzplatte (1) flächenmäßig derart auf den Einschub (6) abgestimmt ist, dass die Schutzplatte (1) passgenau in dem Einschub (6) aufgenommen ist.

4. Essen-Liefertasche (14) nach einem der Ansprüche 1 bis 3, **dadurch gekennzeichnet, dass** die Schutzplatte (1) rechteckig oder kreisförmig ausgebildet ist, wobei vorzugsweise - bei einer rechteckigen Schutzplatte (1) - die Schutzplatte (1) Abmessungen im Bereich zwischen 380 mm x 370 mm und 390 mm x 370 mm aufweist.

5. Essen-Liefertasche (14) nach Anspruch 4, **dadurch gekennzeichnet, dass** Kanten der Schutzplatte (1) abgerundet oder abgeschrägt ausgebildet sind.

6. Essen-Liefertasche (14) nach einem der Ansprüche 1 bis 5, **dadurch gekennzeichnet, dass** eine Dicke (34) der Schutzplatte (1) zwischen 1 mm und 3 mm beträgt.

7. Essen-Liefertasche (14) nach einem der Ansprüche 1 bis 6, **dadurch gekennzeichnet, dass** die Schutzplatte (1) von Aluminium gebildet ist.

8. Essen-Liefertasche (14) nach einem der Ansprüche 1 bis 7, **dadurch gekennzeichnet, dass** die Schutzplatte (1) mittels Nieten (9), vorzugsweise Blindnieten, mit der Induktions-Wärmescheibe (8) verbunden ist.

9. Essen-Liefertasche (14) nach einem der Ansprüche 1 bis 8, **dadurch gekennzeichnet, dass** die Induktions-Wärmescheibe (8) kreisflächenförmig ausgebildet ist, wobei vorzugsweise die Induktions-Wärmescheibe (8) einen Durchmesser (35) von 250 mm aufweist.

10. Essen-Liefertasche (14) nach einem der Ansprüche 1 bis 9, **dadurch gekennzeichnet, dass** eine Dicke (36) der Induktions-Wärmescheibe (8) 10 mm beträgt.

11. Essen-Liefertasche (14) nach einem der Ansprüche 1 bis 10, **dadurch gekennzeichnet, dass** eine dem Innenraum (17) abgewandte Wandung des Einschubs (6) mit einer Aluminiumbeschichtung (4) versehen ist, die dazu vorgesehen und eingerichtet ist, von der Induktions-Wärmescheibe (8) abgestrahlte Wärme an der Wandung zu reflektieren.

12. Essen-Liefertasche (14) nach einem der Ansprüche 1 bis 11, **dadurch gekennzeichnet, dass** der Boden (25) von Glasfaser-Gewebe (5) gebildet ist.

13. Essen-Liefertasche (14) nach einem der Ansprüche 1 bis 12, **dadurch gekennzeichnet, dass** der Boden (25) eine Isolationsschicht (3) aufweist, die von einem Isolationsstoff gebildet ist, wobei vorzugsweise die Isolationsschicht (3) eine Dicke zwischen 10 mm und 12 mm aufweist.

## Claims

1. A food delivery bag (14) for delivering foods, comprising
- a floor (25),
- an insert (6),
- an induction heating disk (8), wherein the induction heating disk (8) is mounted in the insert (6),
- a protective plate (1), wherein the induction heating disk (8) is arranged on a lower side (37) of the protective plate (1), and mounted to the protective plate (1),
**characterized in that** an upper side (38) of the protective plate (1) is aligned in the direction of an interior space (17) of the food delivery bag (14).

2. The food delivery bag (14) according to claim 1, **characterized in that** a surface area of the protective plate (1) significantly exceeds the surface area of the induction heating disk (8) in terms of amount.

3. The food delivery bag (14) according to one of claims 1 or 2, **characterized in that** the protective plate (1) is matched to the insert (6) in terms of surface area in such a way that the protective plate (1) is precisely fitted in the insert (6).

4. The food delivery bag (14) according to one of claims 1 to 3, **characterized in that** the protective plate (1) is rectangular or circular in design, wherein, given a rectangular protective plate (1), the protective plate (1) has dimensions ranging between 380 mm x 370 mm and 390 mm x 370 mm.

5. The food delivery bag (14) according to claim 4, **characterized in that** edges of the protective plate (1) are rounded or beveled in design.

6. The food delivery bag (14) according to one of claims 1 to 5, **characterized in that** a thickness (34) of the protective plate (1) measures between 1 mm and 3 mm.

7. The food delivery bag (14) according to one of claims 1 to 6, **characterized in that** the protective plate (1) is made out of aluminum.

8. The food delivery bag (14) according to one of claims 1 to 7, **characterized in that** the protective plate (1) is connected with the induction heating disk (8) by means of rivets (9), preferably blind rivets.

9. The food delivery bag (14) according to one of claims 1 to 8, **characterized in that** the induction heating disk (8) is circularly shaped, wherein the induction heating disk (8) preferably has a diameter (35) of 250 mm.

10. The food delivery bag (14) according to one of claims 1 to 9, **characterized in that** a thickness (36) of the induction heat disk (8) measures 10 mm.

11. The food delivery bag (14) according to one of claims 1 to 10, **characterized in that** a wall of the insert (6) facing away from the interior space (17) is provided with an aluminum coating (4), which is provided and set up to reflect heat radiated by the induction heat disk (8) to the wall.

12. The food delivery bag (14) according to one of claims 1 to 11, **characterized in that** the floor (25) consists of glass fiber fabric (5).

13. The food delivery bag (14) according to one of claims 1 to 12, **characterized in that** the floor (25) has an insulation layer (3) that consists of an insulation material, wherein the insulation layer (3) preferably has a thickness of between 10 mm and 12 mm.

## Revendications

1. Sac de livraison de nourriture (14), destiné à livrer des produits alimentaires, comprenant
- un fond inférieur (25),
- un insert (6),
- un disque chauffant à induction (8), le disque chauffant à induction (8) étant logé dans l'insert (6),
- une plaque protectrice (1), le disque chauffant à induction (8) étant placé sur une face inférieure (37) de la plaque protectrice (1) et étant monté sur la plaque protectrice (1),
**caractérisé en ce qu'**une face supérieure (38) de la plaque protectrice (1) est orientée en direction d'un espace intérieur (17) du sac de livraison de nourriture (14).

2. Sac de livraison de nourriture (14) selon la revendication 1, **caractérisé en ce qu'**au niveau de la valeur, une surface de la plaque protectrice (1) dépasse nettement la surface du disque chauffant à induction (8).

3. Sac de livraison de nourriture (14) selon l'une quelconque des revendications 1 ou 2, **caractérisé en ce qu'**au niveau de la surface, la plaque protectrice (1) est adaptée à l'insert (6), de telle sorte que la plaque protectrice (1) soit réceptionnée sur mesure dans l'insert (6).

4. Sac de livraison de nourriture (14) selon l'une quelconque des revendications 1 à 3, **caractérisé en ce que** la plaque protectrice (1) est conçue de forme rectangulaire ou de forme circulaire, de préférence (si la plaque protectrice (1) est rectangulaire), la plaque protectrice (1) présentant des dimensions dans l'ordre de 380 mm x 370 mm et de 390 mm x 370 mm.

5. Sac de livraison de nourriture (14) selon la revendication 4, **caractérisé en ce que** des arêtes de la plaque protectrice (1) sont conçues de manière arrondie ou chanfreinée.

6. Sac de livraison de nourriture (14) selon l'une quelconque des revendications 1 à 5, **caractérisé en ce qu'**une épaisseur (34) de la plaque protectrice (1) s'élève à entre 1 mm et 3 mm.

7. Sac de livraison de nourriture (14) selon l'une quelconque des revendications 1 à 6, **caractérisé en ce que** la plaque protectrice (1) est constituée d'aluminium.

8. Sac de livraison de nourriture (14) selon l'une quelconque des revendications 1 à 7, **caractérisé en ce que** la plaque protectrice (1) est assemblée au moyens de rivets (9), de préférence de rivets borgnes avec le disque chauffant à induction (8).

9. Sac de livraison de nourriture (14) selon l'une quelconque des revendications 1 à 8, **caractérisé en ce que** le disque chauffant à induction (8) est conçu en forme de surface circulaire, de préférence le disque chauffant à induction (8) présentant un diamètre (35) de 250 mm.

10. Sac de livraison de nourriture (14) selon l'une quelconque des revendications 1 à 9, **caractérisé en ce qu'**une épaisseur (36) du disque chauffant à induction (8) s'élève à 10 mm.

11. Sac de livraison de nourriture (14) selon l'une quelconque des revendications 1 à 10, **caractérisé en ce qu'**une paroi de l'insert (6) détournée de l'espace intérieur (17) est munie d'un revêtement en aluminium (4), qui est prévu et configuré pour réfléchir sur la paroi de la chaleur rayonnée par le disque chauffant à induction (8).

12. Sac de livraison de nourriture (14) selon l'une quelconque des revendications 1 à 11, **caractérisé en ce que** le fond inférieur (25) est constitué d'un tissu en fibres de verre (5).

13. Sac de livraison de nourriture (14) selon l'une quelconque des revendications 1 à 12, **caractérisé en ce que** le fond inférieur (25) comporte une couche isolante (3) qui est constituée d'une matière isolante, de préférence, la couche isolante (3) présentant une épaisseur comprise entre 10 mm et 12 mm.
